# EUROPEAN PATENT APPLICATION

(11) **EP 4 675 567 A1**
(43) Date of publication of application: **07.01.2026**
(21) Application number: 24763389.4
(22) Date of filing: 05.01.2024
(51) Int. Cl.: G06T 19/00, G06T 1/00

(54) **DATA ACQUISITION DEVICE, IMAGE ACQUISITION DEVICE, DATA STRUCTURE, DATA ACQUISITION METHOD, IMAGE ACQUISITION METHOD, PROGRAM, AND RECORDING MEDIUM**

(30) Priority: 27.02.2023 JP 2023028681
(71) Applicant: FUJIFILM Corporation, Tokyo 106-8620 (JP)
(72) Inventor: KOBAYASHI Masaru, Saitama-shi, Saitama 331-9624 (JP); YAMAJI Kei, Saitama-shi, Saitama 331-9624 (JP); NISHIO Yuya, Saitama-shi, Saitama 331-9624 (JP); KOBAYASHI Toshiki, Saitama-shi, Saitama 331-9624 (JP)
(74) Representative: Dehns Germany Partnerschaft mbB
(86) International application number: PCT/JP2024/000039
(87) International publication number: WO 2024/180904

(57) **Abstract**

Provided are a data acquisition device, an image acquisition device, a data structure, a data acquisition method, an image acquisition method, a program, and a recording medium that can acquire an image close to a real space through imaging in a virtual space.

A data acquisition device according to an embodiment of the present invention includes a processor, in which the processor is configured to acquire real subject data corresponding to virtual object data for displaying a virtual object in a virtual space, based on the virtual object data and a display condition for displaying the virtual space related to the virtual object.

## Description

### BACKGROUND OF THE INVENTION

### 1. Field of the Invention

An embodiment of the present invention relates to a data acquisition device, an image acquisition device, a data structure, a data acquisition method, an image acquisition method, a program, and a recording medium that acquire real subject data corresponding to virtual object data.

### 2. Description of the Related Art

A user can set an avatar (a character that imitates the user) in a virtual space (metaverse) that reproduces a real space and can perform various activities in the virtual space via the avatar. As an example, the user operates the avatar in the virtual space to image the virtual space using a virtual camera that imitates a real camera (for example, see JP2009-176025A).

### SUMMARY OF THE INVENTION

An image obtained by imaging the virtual space is merely computer graphics (CG) or animation. This image is close to an image that looks as if the image was captured in the real space, which makes it possible for the user to have an experience as if the user visited the place and performed imaging in the real space. That is, since an image close to the real space is acquired through imaging in the virtual space, it is possible to provide the user with a more valuable experience.

An embodiment of the present invention has been made in view of the above circumstances, and an object of the present invention is to provide a data acquisition device, an image acquisition device, a data structure, a data acquisition method, an image acquisition method, a program, and a recording medium that can acquire an image close to a real space through imaging in a virtual space.

In order to achieve this object, the present invention has the following configurations.
[1] There is provided a data acquisition device comprising a processor,
   in which the processor is configured to acquire real subject data corresponding to virtual object data for displaying a virtual object in a virtual space, based on the virtual object data and a display condition for displaying the virtual space related to the virtual object.
[2] In the data acquisition device according to [1], the processor is configured to associate the acquired real subject data with the virtual object data.
[3] In the data acquisition device according to [1] or [2], the real subject data is data for displaying a real subject corresponding to the virtual object.
[4] In the data acquisition device according to any one of [1] to [3], the real subject data is an image obtained by imaging the real subject corresponding to the virtual object in a real space.
[5] In the data acquisition device according to any one of [1] to [4], the real subject data is a three-dimensional image of a three-dimensional shape of the real subject corresponding to the virtual object.
[6] There is provided an image acquisition device comprising a processor,
   in which the processor is configured to:
   receive image acquisition conditions for acquiring a virtual image in which a virtual space related to a virtual object is shown; and
   acquire a real subject image for a real subject corresponding to the virtual object, based on the virtual image and the image acquisition conditions.
[7] In the image acquisition device according to [6], the processor is configured to combine a plurality of the acquired real subject images to generate a composite image corresponding to the virtual image.
[8] In the image acquisition device according to [6] or [7], an avatar and a background as the virtual objects are present in the virtual image.
[9] In the image acquisition device according to any one of [6] to [8], the image acquisition conditions include an imaging condition for performing imaging with a virtual camera that imitates a real camera in the virtual space.
[10] In the image acquisition device according to any one of [6] to [9], the image acquisition conditions include an environmental condition related to a virtual environment that imitates a real environment in the virtual space.
[11] In the image acquisition device according to any one of [6] to [10], the image acquisition conditions include a condition related to a background in the virtual space.
[12] In the image acquisition device according to any one of [6] to [11], the processor is configured to correct the real subject image based on the image acquisition conditions.
[13] In the image acquisition device according to any one of [6] to [12], the processor is configured to correct the real subject image according to a state of the virtual object shown in the virtual image.
[14] In the image acquisition device according to any one of [7] to [13], the processor is configured to store the acquired composite image in association with the image acquisition conditions.
[15] There is provided a data structure comprising:
   virtual object data that is used in a process of displaying a virtual object in a virtual space; and
   a display condition that is used together with the virtual object data in a process of acquiring real subject data corresponding to the virtual object data and that is for displaying the virtual space related to the virtual object.
[16] The data structure according to [15] further comprises the acquired real subject data.
[17] There is provided a data acquisition method executed by a processor, the data acquisition method comprising a process of acquiring real subject data corresponding to virtual object data for displaying a virtual object in a virtual space, based on the virtual object data and a display condition for displaying the virtual space related to the virtual object.
[18] There is provided an image acquisition method executed by a processor, the image acquisition method comprising:
   a process of receiving image acquisition conditions for acquiring a virtual image in which a virtual space related to a virtual object is shown; and
   a process of acquiring a real subject image for a real subject corresponding to the virtual object, based on the virtual image and the image acquisition conditions.
[19] There is provided a program causing a computer to execute each process included in the data acquisition method according to [17].
[20] There is provided a program causing a computer to execute each process included in the image acquisition method according to [18].
[21] There is provided a computer-readable recording medium on which a program causing a computer to execute each process included in the data acquisition method according to [17] is recorded.
[22] There is provided a computer-readable recording medium on which a program causing a computer to execute each process included in the image acquisition method according to [18] is recorded.

According to an embodiment of the present invention, it is possible to provide a data acquisition device, an image acquisition device, a data structure, a data acquisition method, an image acquisition method, a program, and a recording medium that can acquire an image close to a real space through imaging in a virtual space.

### BRIEF DESCRIPTION OF THE DRAWINGS

Fig. 1 is a diagram showing an outline of image acquisition according to an embodiment of the present invention.
Fig. 2 is a diagram showing an example of a configuration of an image acquisition system including an image acquisition device according to the embodiment of the present invention.
Fig. 3 is a diagram conceptually showing a management database that manages association between virtual object data and real subject data.
Fig. 4 is a diagram showing functions of the image acquisition device according to the embodiment of the present invention.
Fig. 5 is a diagram conceptually showing an image acquisition process in the image acquisition device according to the embodiment of the present invention.
Fig. 6 is a diagram showing an example of a composite image.
Fig. 7 is a diagram showing an example of the composite image.
Fig. 8 is a diagram showing a procedure of an image acquisition flow.
Fig. 9 is a diagram showing a composite image obtained by correcting a real subject image.
Fig. 10 is a diagram showing a composite image obtained by correcting a real subject image.

### DESCRIPTION OF THE PREFERRED EMBODIMENTS

A specific embodiment of the present invention will be described with reference to the drawings. However, the embodiment described below is only an example for ease of understanding of the present invention and is not intended to limit the present invention. In addition, the present invention may be changed or improved from the following embodiment without departing from the gist of the present invention. Further, the present invention includes its equivalents.

In the present specification, the concept of an "apparatus" includes a single apparatus that exerts a specific function and includes a combination of a plurality of apparatuses that are distributed and present independently of each other and exert a specific function in cooperation (coordination) with each other.

Furthermore, in the present specification, an "image" refers to image data unless otherwise specified. The image data may be, for example, image data of a lossy compression format, such as a joint photographic experts group (JPEG) format, image data of a lossless compression format, such as a graphics interchange format (GIF) or a portable network graphics (PNG) format, three-dimensional image data of a virtual reality modeling language (VRML) format that is used on a web browser, or video data composed of a plurality of frame images.

Further, the image data may include accessory information indicating information such as a file name, an imaging date and time, and an imaging place.

In addition, one aspect of a data acquisition device according to the embodiment of the present invention is an image acquisition device according to the embodiment of the present invention, and the following description will be made based on the image acquisition device according to the embodiment of the present invention.

Further, in the present specification, a "user" is a user who uses the image acquisition device according to the embodiment of the present invention. The use of the image acquisition device means the use of functions of the image acquisition device and includes the use of the functions of the image acquisition device through a device (for example, a user terminal) that can communicate with the image acquisition device, in addition to direct operation of the image acquisition device.

### <<Overview of Main Image Acquisition>>

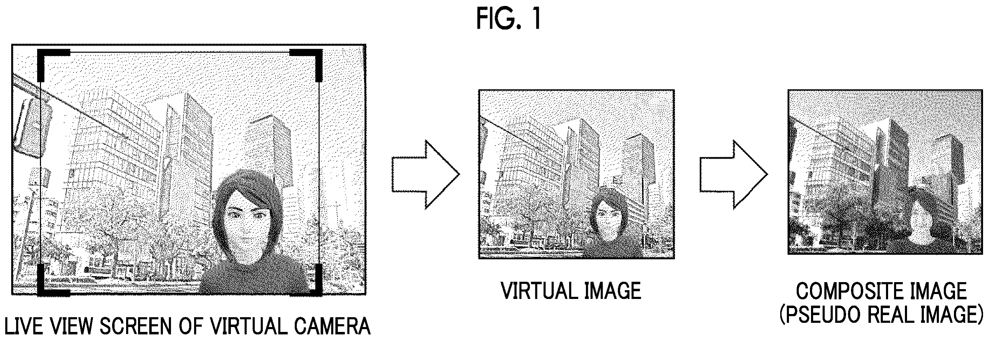

Image acquisition (hereinafter, main image acquisition) performed using the image acquisition device and an image acquisition method according to the embodiment of the present invention will be described with reference to Fig. 1.

An image finally acquired by the main image acquisition is a composite image that imitates a real image captured in a real space. A right view in Fig. 1 is an example of the composite image. The composite image is acquired by combining a plurality of images obtained by imaging a real subject in the real space such that a scene in the real space is reproduced. The "real subject" is a person, a thing, a background, or the like that is present in the real space, which will be described below. Therefore, the composite image is a pseudo real image that looks as if the composite image was captured in the real space.

In the main image acquisition, first, the user operates his/her avatar in a virtual space to image the virtual space with a virtual camera that imitates a real camera at a desired imaging place in the virtual space. Therefore, the image acquisition device acquires a virtual image showing a portion or all of the virtual space. A left view in Fig. 1 is an example of a live view screen of the virtual camera, and a center view in Fig. 1 is an example of a virtual image obtained by performing imaging with the virtual camera. In addition, in the following description, it is assumed that the imaging with the virtual camera includes the capture of a screenshot.

In addition, since specific data processing and the like in a case where the virtual space is imaged with the virtual camera are known as described in JP2009-176025A and the like, a description thereof will be omitted in the present specification. Further, since objects, places, environments, and the like in the real space are reproduced in the virtual space, the virtual camera can be treated in the same manner as the real camera. Specifically, imaging conditions can be set in the same manner as those in imaging in the real space.

The "virtual space" is, for example, a virtual space (metaverse) that reproduces the real space and is a space in which virtual objects that will be described below are disposed. A place that is actually present in the real space, for example, one street in Tokyo is reproduced in the virtual space. Even for a place that the user has never actually visited, the user can operate his or her avatar in the virtual space that has reproduced the place to have an experience as if the user visited the place.

The user performs imaging through his or her avatar in the virtual space. In the virtual camera, the imaging conditions can be set in the same manner as in the real camera. Specifically, a virtual aperture, a focal length, a shutter speed, an exposure amount, an ISO sensitivity, a white balance, a focus position, an imaging direction, an angle of view, and the like can be set. Therefore, the user can perform imaging under the imaging conditions set by imitating those of the real camera, using the virtual camera.

The acquired virtual image, that is, the captured image of the virtual space is displayed on a screen of a user terminal (a smart device, a tablet terminal, a notebook personal computer (PC), or the like) used by the user.

Then, the image acquisition device generates a composite image (a right view in Fig. 1) corresponding to the virtual image based on the virtual image and the image acquisition conditions (display conditions) in a case where the virtual image has been acquired and acquires the composite image. The acquired composite image is displayed on the screen of the user terminal.

The main image acquisition will be described in more detail. First, the user who uses the main image acquisition starts an image acquisition application program (hereinafter, an image acquisition application) installed in the user terminal in advance. After the screen of the user terminal is changed to a screen for inputting user information, the user inputs his/her own user information (a user ID, a password, and the like). In a case where the user is authenticated, the screen of the user terminal is changed to the virtual space.

The user operates the avatar in the virtual space, in which the avatar is disposed, through the user terminal, in which the image acquisition application has been started, to determine a desired imaging place and then prepares for imaging with the virtual camera. In a case where the virtual camera is started, the screen of the user terminal is changed to the live view screen (the left view in Fig. 1) by the virtual camera. The user sets the imaging conditions while viewing the live view screen. After the setting of various conditions is ended, the user clicks on, for example, an icon (not shown) of "imaging" displayed on the screen of the user terminal. Then, the image acquisition device acquires a virtual image. The acquired virtual image is displayed on the screen of the user terminal. The user may repeat the imaging with the virtual camera until a desired virtual image is obtained while checking the displayed virtual image.

After the desired virtual image is obtained, the user clicks on, for example, an icon (not shown) of a "pseudo real image" displayed on the user screen. Then, the image acquisition device generates a composite image corresponding to the virtual image, based on the virtual image and the image acquisition conditions including the imaging conditions and acquires the composite image. The acquired composite image is displayed on the screen of the user terminal.

Further, in the above-described example, the virtual image is displayed on the screen of the user terminal. However, the present invention is not limited thereto. For example, after the imaging with the virtual camera is performed, the step of displaying the virtual image may be skipped, and the composite image may be directly displayed on the screen of the user terminal. In this case, the user may repeat the imaging with the virtual camera while checking the displayed composite image until the desired composite image is obtained.

As described above, according to the main image acquisition, the composite image (pseudo real image) corresponding to the virtual image can be acquired by the imaging with the virtual camera. That is, it is possible to acquire an image close to the real space through imaging in the virtual space. As a result, it is possible to provide the user with a more valuable experience.

### <<Example of Configuration of Image Acquisition System According to One Embodiment of the Present Invention>>

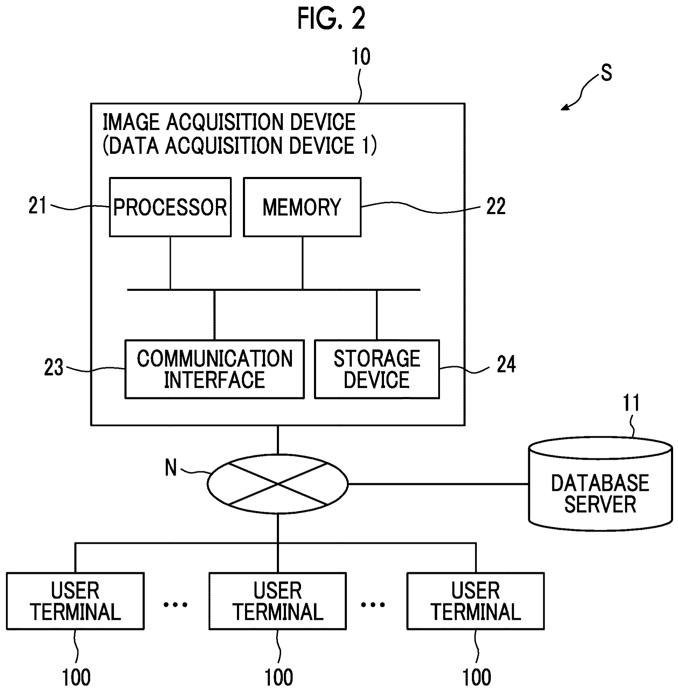

A configuration of an image acquisition system (hereinafter, referred to as an "image acquisition system S") including the image acquisition device according to the embodiment of the present invention will be described with reference to Fig. 2.

As shown in Fig. 2, the image acquisition system S is configured by an image acquisition device 10, a plurality of user terminals 100, and a database server 11.

In addition, the database server 11 may be configured as a portion of the image acquisition device 10.

The image acquisition device 10 consists of a computer and is configured by, for example, a personal computer (PC), a workstation, or a server computer. The image acquisition device 10 may be configured by one computer or may be configured by a plurality of computers that are distributed in parallel. Further, in a case where the computer constituting the image acquisition device 10 is a server computer, the computer may be a server computer for an application service provider (ASP), for a software as a service (SaaS), for a platform as a service (PaaS), or for an infrastructure as a service (IaaS). In this case, in a case where necessary information is input to the user terminal 100, the server computer executes various processes (calculations) on the basis of the input information, and the results of the calculations are output to the user terminal 100. That is, the functions of the server computer, which is the image acquisition device 10, can be used by the user terminal.

As shown in Fig. 2, the computer constituting the image acquisition device 10 includes a processor 21, a memory 22, a communication interface 23, and a storage device 24.

The processor 21 is configured by, for example, a central processing unit (CPU), a micro-processing unit (MPU), a micro controller unit (MCU), a graphics processing unit (GPU), a digital signal processor (DSP), a tensor processing unit (TPU), or an application specific integrated circuit (ASIC).

The memory 22 is configured by, for example, a semiconductor memory such as a read only memory (ROM) or a random access memory (RAM).

The communication interface 23 may be configured by, for example, a network interface card or a communication interface board. The computer constituting the image acquisition device 10 can communicate with another device connected to the Internet, a mobile communication line, or the like via the communication interface 23.

The storage device 24 is configured by, for example, a flash memory, a hard disc drive (HDD), a solid state drive (SSD), a flexible disc (FD), a magneto-optical disc (MO disc), a compact disc (CD), a digital versatile disc (DVD), a secure digital card (SD card), or a universal serial bus memory (USB memory). In addition, the storage device 24 may be built into a computer main body constituting the image acquisition device 10 or may be attached as an external storage device to the computer main body.

The user terminal 100 is a computer used by the user and is, specifically, configured by a smart device, such as a smartphone, a tablet terminal, a laptop personal computer (PC), or the like. The user terminal 100 comprises a processor, a memory, and a communication interface. The image acquisition application for using the image acquisition system S is stored in the user terminal 100. In the use of the image acquisition system S, the user downloads the image acquisition application from a predetermined site and installs the image acquisition application in the user terminal 100.

### <For Database>

The database server 11 is, for example, a cloud-based server provided by a company which operates services using the image acquisition device 10, specifically, a company which provides a main image acquisition service. The database server 11 includes various types of data necessary for the main image acquisition, and the various types of data have a data structure. The image acquisition device 10 is connected to the database server 11 via a network N such that the image acquisition device 10 can communicate therewith and can freely read out various types of data.

The various types of data constituting the data structure include data related to the user, data related to the virtual space, virtual object data related to virtual objects, real subject data related to real subjects, image acquisition conditions (display conditions), virtual images, and composite images.

Here, the "virtual object" is interpreted in a broad sense, is not limited to a specific tangible object, and includes a person (avatar), a thing, a background, and the like that are present in the virtual space. Information related to the "person (avatar) " as the virtual object is stored in the database server 11 in association with the data related to the user. The "thing" as the virtual object is a thing other than the person and widely includes, for example, real estate (buildings, mountains, and the like) and movable property (cars, animals, and the like). The "background" as the virtual object includes, for example, a sky condition in a case of outdoors and includes a ceiling, a wall, a floor, and the like in a case of indoors.

In addition, the "real subject" is interpreted in a broad sense, is not limited to a specific tangible object, and includes a person (or a face of a person), a thing, a background, and the like that are present in the real space. The real subject referred to here corresponds to the virtual object displayed in the virtual space, and it is assumed that there is a real subject corresponding to each virtual object.

### (For Data Related to User)

The "data related to the user" includes personal information, such as the identification ID and password of the user, and is associated with information related to the person (avatar) as the virtual object. For example, the identification ID, password, and the like of the user are used to log in to the image acquisition application. The information related to the avatar is used by the user to specify his or her avatar after the login of the user is permitted.

### (For Data Related to Virtual Space)

The "data related to the virtual space" includes, for example, information related to the virtual space in which the virtual objects are disposed, specifically, information for specifying the size, internal environment, and the like of the space.

### (For Virtual Object Data)

The "virtual object data" is used in a process of displaying the virtual object in the virtual space and is data for displaying the virtual object in the virtual space.

The virtual object data is present for each virtual object disposed in the virtual space. More specifically, each virtual object is present according to the numbers of persons (avatars), things, and backgrounds in the virtual space.

Further, in this example, the virtual object data is present for each feature of the virtual object. More specifically, the features (display content) of the person (avatar) as the virtual object vary depending on, for example, the posture and expression of the avatar, and time, weather, a period (season), indoors or outdoors, a display position, and a display direction in the virtual space. Therefore, for example, a plurality of virtual object data items are present for the avatar of one person according to the features.

Similarly to the person (avatar), a plurality of virtual object data items are present for each feature (display content) of the thing and the background as the virtual objects.

The virtual object data is stored in a file for each virtual object, more specifically, for each feature of the virtual object, and an identification number (also referred to as an ID), a file name, and the like are given to each file. Similarly, the real subject data which will be described below is stored in a file for each real subject, more specifically, for each feature of the real subject, and an identification number, a file name, and the like are given to each file. The virtual object data and the real subject data are stored in separate files.

In addition, the present invention is not limited to the case where the virtual object data and the real subject data are stored in separate files. For example, real subject data acquired by executing a "process of acquiring real subject data corresponding to virtual object data", which will be described below, may be stored in a data file in which the virtual object data is stored. That is, the virtual object data and the real subject data corresponding to each other may be stored to be included in the same data file.

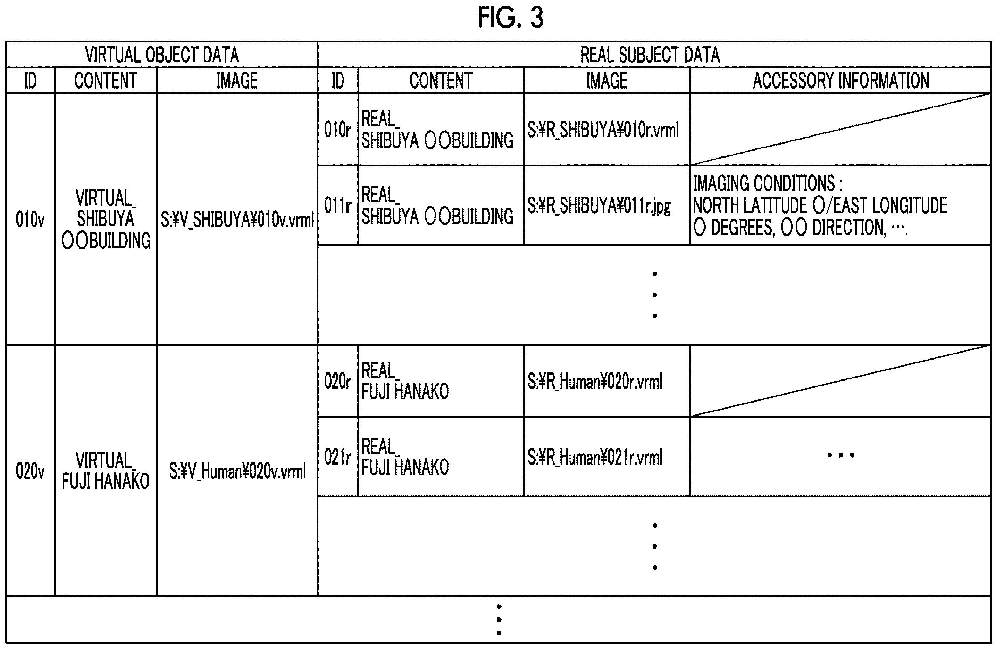

In addition, the database server 11 may have, for example, a management database for managing the association between the real subject data obtained by executing the "process of acquiring the real subject data corresponding to the virtual object data" and the virtual object data corresponding to the real subject data. Fig. 3 is a diagram conceptually showing the management database for managing the association between the virtual object data and the real subject data. The management database indicates the correspondence between each file in which the virtual object data is stored and each file in which the real subject data corresponding to the virtual object data is stored. More specifically, in the management database, the ID of the file, the content of the virtual object, and the image file name of a virtual object image may be managed for the virtual object data, and the ID of the file, the content of the real subject, and the image file name of a real subject image may be managed for the real subject data.

The virtual object data includes the virtual object image and information related to the real subject data.

The "virtual object image" includes a main image indicating the gradation of each pixel and accessory information.

The main image includes a three-dimensional image showing the three-dimensional shape of the virtual object and is displayed as a two-dimensional image according to a display angle in the virtual space.

The accessory information includes, for example, position information of the virtual object in the virtual space. A positional relationship between the virtual objects in the virtual space is specified by the positional information of each virtual object.

The "information related to the real subject data" is information related to the real subject data corresponding to the virtual object data and is, specifically, information related to the ID and file name of the file in which the corresponding real subject data is stored and a path to the file. Therefore, it is possible to refer to the corresponding real subject data from the virtual object data. That is, in the database server 11, the virtual object data and the real subject data acquired by executing the "process of acquiring the real subject data corresponding to the virtual object data" are stored in association with each other.

In addition, the virtual object data and the real subject data associated with each other are stored in the database server 11 in association with the image acquisition conditions which will be described below.

### (For Real Subject Data)

The "real subject data" is used in the process of displaying the real subject corresponding to the virtual object and is data for displaying the real subject corresponding to the virtual object.

The real subject data is present for each real subject. The real subject is present according to the number of virtual objects.

Further, the real subject data is present for each feature of the real subject in this example, similarly to the virtual object data. More specifically, the features of a person as the real subject vary depending on, for example, the posture and expression of the person, and time, weather, a period (season), indoors or outdoors, a display position, and a display direction in the real space in which the real subject is present. Therefore, for example, a plurality of real subject data items are present for a predetermined person according to the features.

Similarly to the person, for the object and the background as the real subjects, a plurality of real subject data items are present according to the features of each real subject.

The real subject data includes a real subject image, information related to the virtual object data, and information for acquiring the real subject image ex post facto.

The "real subject image" includes a main image indicating the gradation of each pixel and accessory information.

The accessory information is position information of the real subject in the real space and imaging conditions including an imaging direction and the like and includes, for example, tag information in an exchangeable image file format (Exif). The position information is acquired by a global positioning system (GPS) or the like. The position information of the real subject in the real space corresponds to the position information of the corresponding virtual object in the virtual space.

The real subject image includes an image (two-dimensional image) obtained by imaging the real subject corresponding to the virtual object in the real space, a three-dimensional image of a three-dimensional shape of the real subject corresponding to the virtual object, or the like. The three-dimensional image is acquired, for example, by three-dimensionally scanning the three-dimensional shape of the real subject (for example, a person).

The "information related to the virtual object data" is information related to the virtual object data corresponding to the real subject data and is, specifically, information related to the ID and file name of the file in which the virtual object data is stored and a path to the file. Therefore, it is possible to refer to the corresponding virtual object data from the real subject data. That is, in the database server 11, the virtual object data and the real subject data acquired by executing the "process of acquiring the real subject data corresponding to the virtual object data" are stored in association with each other.

In addition, as described above, the virtual object data and the real subject data associated with each other are associated with the image acquisition conditions, which will be described below, and are stored in the database server 11.

The "information for retrospectively acquiring the real subject image" is data that enables the real subject image to be acquired retrospectively even in a case where the real subject image is not included in the real subject data and is, for example, the name of the real subject and the position information of the real subject.

The name of the real subject is, for example, a keyword or the like that enables the real subject to be specified by an Internet search. The position information of the real subject is coordinate information of the real subject in the real space, specifically, GPS information indicating longitude and latitude.

Examples of means for retrospectively acquiring the real subject image include acquiring (downloading) the real subject image found by an Internet search and performing imaging using a drone.

### (For Image Acquisition Conditions)

The "image acquisition conditions" are display conditions for displaying the virtual space related to the virtual object, that is, the virtual space in which the virtual object is present. In other words, the image acquisition conditions are conditions for acquiring the virtual image showing the virtual space related to the virtual object. The image acquisition conditions are used together with the virtual object data in the "process of acquiring the real subject data corresponding to the virtual object data".

More specifically, the image acquisition conditions include imaging conditions for performing imaging with the virtual camera that imitates the real camera in the virtual space, environmental conditions related to a virtual environment that imitates a real environment in the virtual space and conditions (also referred to as "background conditions") related to the background in the virtual space. In addition, in a case of a video, the image acquisition conditions include, for example, a movement path of the virtual object.

The "imaging conditions" are setting conditions in a case where imaging is performed with the virtual camera and are imaging conditions set to imitate the imaging conditions of the real camera. Examples of specific imaging conditions include a virtual lens aperture, a focal length of the lens, a shutter speed, an exposure amount, an ISO sensitivity, a white balance, a focus position, an imaging direction, and an angle of view. The imaging conditions are set by operating the virtual camera using the avatar in the virtual space.

In addition, the "environmental conditions" include, for example, light source conditions related to a virtual light source that imitates a real light source. The "light source conditions" are conditions such as the position and orientation of a light source with respect to the virtual object in the virtual space. Examples of the light source in the virtual space include natural light, such as sunlight, in the virtual space and artificial light such as spotlight.

The "background conditions" mean conditions such as time, weather, a period (season), and indoors and outdoors in the virtual space.

### (For Virtual Image)

As described above, the "virtual image" is an image showing a portion or all of the virtual space related to the virtual object. The virtual objects shown in the virtual image include, for example, at least one of an avatar, a thing, or a background present in the virtual space.

In addition, the virtual image is stored in the database server 11 in association with the virtual object data of the virtual object shown in the virtual image and the image acquisition conditions used to acquire (capture) the virtual image.

### (For Composite Image)

As described above, the "composite image" is a pseudo real image corresponding to the virtual image. The real subjects shown in the composite image include at least one of a person, a thing, or a background as the real subject corresponding to the virtual object.

In addition, the composite image is stored in the database server 11 in association with the real subject data of the real subject shown in the composite image, the virtual object data corresponding to the real subject data, and the image acquisition conditions used to acquire (capture) the virtual image.

### <<Functions of Image Acquisition Device According to One Embodiment of the Present Invention>>

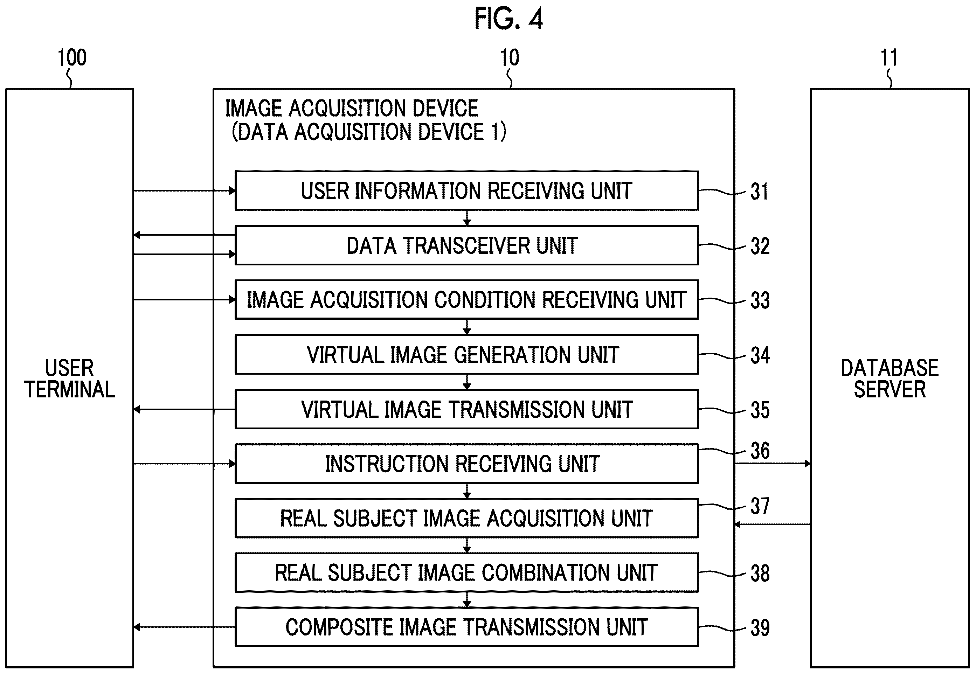

Next, a configuration of the image acquisition device 10 according to one embodiment of the present invention will be described again from a functional perspective. As shown in Fig. 4, the image acquisition device 10 includes a user information receiving unit 31, a data transceiver unit 32, an image acquisition condition receiving unit 33, a virtual image generation unit 34, a virtual image transmission unit 35, an instruction receiving unit 36, a real subject image acquisition unit 37, a real subject image combination unit 38, and a composite image transmission unit 39.

These functional units are implemented by cooperation between a hardware device included in the computer constituting the image acquisition device 10 and the program (that is, software) installed in the computer.

Hereinafter, each functional unit will be described.

The user information receiving unit 31 receives user information (a user ID, a password, and the like) input from the screen of the user terminal 100. Then, the user information receiving unit 31 executes user authentication to determine whether or not login is permitted.

The data transceiver unit 32 transmits data (specifically, data related to the virtual space, virtual object data, and the like) to the user terminal 100 that is permitted to log in and displays a state in which the virtual objects are disposed at predetermined positions in the virtual space on the screen of the user terminal 100. The virtual objects present in the virtual space include at least one of an avatar (person), a thing, or a background. In a case where the user operates the user terminal 100 to move the virtual object, such as the avatar, in the virtual space, the data transceiver unit 32 receives a change in the position information, updates the data according to the changed position information, and transmits the data to the user terminal 100.

The image acquisition condition receiving unit 33 receives the image acquisition conditions. As described above, the image acquisition conditions are conditions for acquiring the virtual image and include the imaging conditions, the environmental conditions, the background conditions, and the like.

The virtual image generation unit 34 generates a virtual image based on the virtual object data, for example, using a known image generation technique. In the example shown in Fig. 1, the virtual image is the center view in Fig. 1. The virtual image has virtual objects such as an avatar (person), a building (object), and a sky condition (background). In this example, the virtual image generation unit 34 generates a virtual image based on the virtual object image included in the virtual object data of each virtual object displayed on the live view screen (the left view in Fig. 1).

In addition, the virtual image generation unit 34 stores the generated virtual image in the database server 11 in association with the virtual object data of the virtual objects shown in the virtual image and the image acquisition conditions for acquiring the virtual image.

The virtual image transmission unit 35 transmits the generated virtual image to the user terminal 100. The transmitted virtual image is displayed on the user terminal 100.

The instruction receiving unit 36 receives an instruction to generate a composite image corresponding to the virtual image from the user terminal 100.

In a case where the instruction to generate a composite image is received, the real subject image acquisition unit 37 acquires real subject data corresponding to the virtual object data based on the virtual object data and the image acquisition conditions. That is, the real subject image acquisition unit 37 executes the "process of acquiring the real subject data corresponding to the virtual object data".

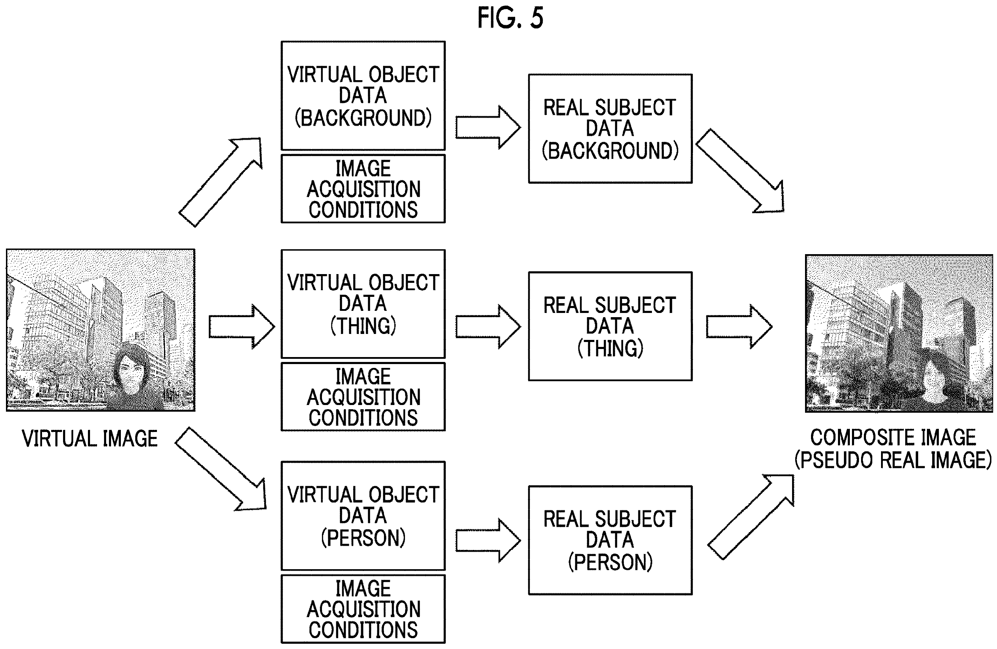

The "process of acquiring the real subject data corresponding to the virtual object data" will be described in more detail with reference to Fig. 5 as an example.

The left view in Fig. 5 is a virtual image, and a plurality of virtual objects (an avatar, a building, and a sky condition) are present in the virtual image. The real subject image acquisition unit 37 analyzes the virtual image and acquires the virtual object data of the virtual objects present in the virtual image. That is, in the example shown in Fig. 5, the virtual object data of each of the virtual objects, such as the avatar, the building, and the sky condition, is acquired.

As shown in the center view in Fig. 5, the real subject image acquisition unit 37 acquires real subject data (real subject image) for the real subjects corresponding to each virtual object, based on the virtual image, more specifically, each virtual object data item acquired from the virtual image and the image acquisition conditions used to acquire the virtual image. That is, the real subject image acquisition unit 37 acquires the real subject image for the real subjects corresponding to the virtual objects based on the virtual image and the image acquisition conditions.

In addition, the real subject image acquisition unit 37 stores the real subject data acquired by the "process of acquiring the real subject data corresponding to the virtual object data" in the database server 11 in association with the virtual object data and the image acquisition conditions.

The real subject image combination unit 38 combines the plurality of acquired real subject images to generate a composite image corresponding to the virtual image. In the example shown in Fig. 5, the real subject image combination unit 38 combines the plurality of acquired real subject images, specifically, the real subject images of the person, the object, and the background.

Further, the real subject image combination unit 38 stores the acquired composite image in the database server 11 in association with various types of data used in the "process of acquiring the real subject data". More specifically, the real subject image combination unit 38 stores the acquired composite image in the database server 11 in association with the real subject data of the real subjects shown in the composite image, the virtual object data corresponding to the real subject data, and the image acquisition conditions used to acquire the virtual image.

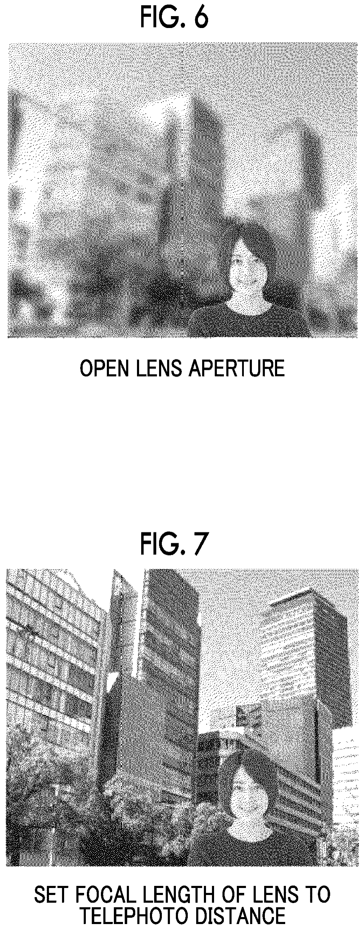

Furthermore, when the imaging condition as image acquisition condition is set to open the lens aperture, the real subject image combination unit 38 generates, for example, a composite image with a suitable blur in which, among the real subjects, the person closest to the virtual camera is in focus and the buildings (things) and the sky condition (background), which are farther away from the virtual camera, other than the person are out of focus as shown in Fig. 6.

In addition, in a case where the imaging condition as the image acquisition condition is set such that the focal length of the lens is a telephoto distance, the real subject image combination unit 38 generates, for example, a composite image having a narrow angle of view and a compression effect as shown in Fig. 7.

Further, in a case where the imaging condition as the image acquisition condition is set such that the ISO sensitivity is high, the real subject image combination unit 38 generates, for example, a composite image in which a night view has been suitably captured.

The composite image transmission unit 39 transmits the generated composite image to the user terminal 100. The transmitted composite image is displayed on the user terminal 100.

### <<For Main Image Acquisition Flow According to One Embodiment of the Present Invention>>

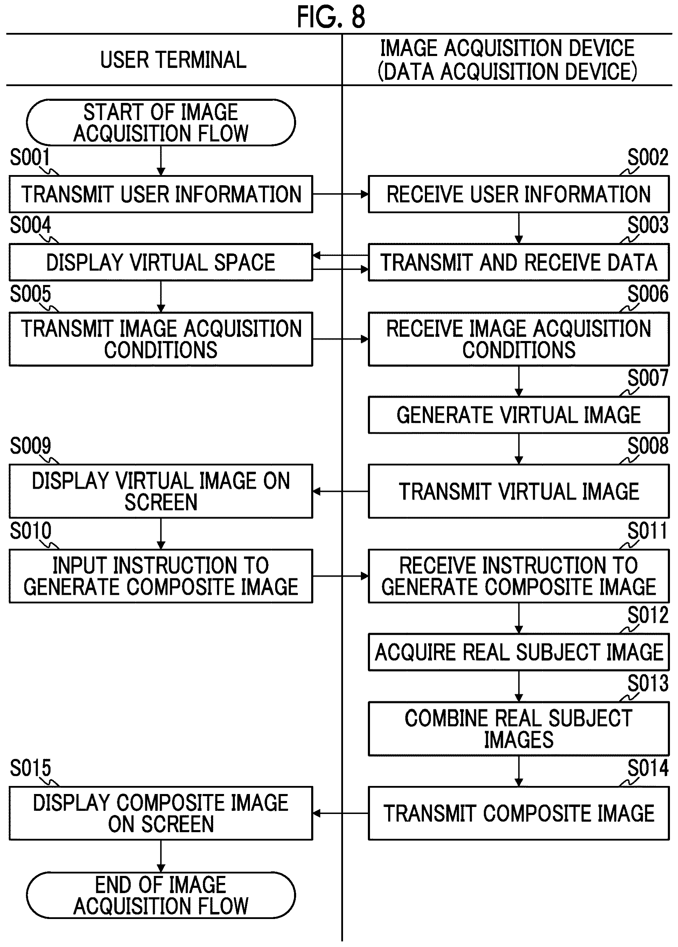

Next, a main image acquisition flow, which is a data processing flow using the image acquisition device 10, will be described. The main image acquisition flow employs the image acquisition method (data acquisition method) according to the embodiment of the present invention and proceeds along a flow shown in Fig. 8. That is, each step in the flow shown in Fig. 8 corresponds to each element constituting the image acquisition method according to the embodiment of the present invention.

In addition, the flow shown in Fig. 8 is only an example, and unnecessary steps may be deleted, new steps may be added, or an order in which steps are performed may be changed without departing from the gist of the present invention.

The main image acquisition flow is started by the startup of the image acquisition application installed in the user terminal 100 as a trigger.

In the main image acquisition flow, first, the user terminal 100 transmits the user information (an identification ID, a password, and the like) input by the user to the image acquisition device 10 (S001). In a case where the user information is received (S002), the processor 21 of the image acquisition device 10 executes user authentication to determine whether or not login is permitted. The processor 21 transmits data (specifically, data related to the virtual space, virtual object data, and the like) to the user terminal 100 that is permitted to log in (S003). In a case where the data is received, the user terminal 100 displays the virtual space in which the virtual objects are present on the screen of the user terminal 100 (S004). Therefore, the user can operate his/her avatar or the like in the virtual space.

Then, the user operates the avatar in the virtual space to determine a desired imaging place and then prepares for imaging with the virtual camera. The user terminal 100 starts the virtual camera in the virtual space in response to an instruction from the user and changes the screen of the user terminal 100 to the live view screen. The user terminal 100 transmits the imaging conditions set by the user while viewing the live view screen to the image acquisition device 10 (S005).

The processor 21 of the image acquisition device 10 receives the image acquisition conditions acquired by the user terminal 100 (S006) and generates a virtual image based on the virtual object data (S007). The processor 21 stores the generated virtual image, the virtual object data of the virtual objects shown in the virtual image, and the image acquisition conditions used to acquire the virtual image in the database server 11 in association with each other.

The processor 21 transmits the generated virtual image to the user terminal 100 (S008).

The user terminal 100 displays the received virtual image on the screen of the user terminal 100 (S009). For example, in a case where the icon of the "pseudo real image" displayed on the screen of the user terminal 100 is clicked, the user terminal 100 instructs the image acquisition device 10 to generate a composite image (S010). In a case where the processor 21 of the image acquisition device 10 receives the instruction to generate a composite image (S011), the processor 21 acquires the real subject image of the real subject corresponding to the virtual object based on the virtual image and the image acquisition conditions (S013). In addition, the processor 21 stores the real subject data including the acquired real subject image, the virtual object data including the virtual object image, and the image acquisition conditions in the database server 11 in association with each other.

The processor 21 combines the plurality of acquired real subject images to generate a composite image corresponding to the virtual image (S014). In the example shown in Fig. 5, the acquired real subject images, specifically, the real subject images of the person, the thing, and the background are combined.

The processor 21 stores the generated composite image, the real subject data of the real subjects shown in the composite image, the virtual object data corresponding to the real subject data, and the image acquisition conditions used to acquire the virtual image in the database server 11 in association with each other.

The processor 21 transmits the generated composite image to the user terminal 100 (S016). The user terminal 100 displays the received composite image on the user terminal 100 (S015).

The main image acquisition flow is ended at a point of time at which the series of processes described above is ended. In addition, since the main image acquisition is randomly performed in the virtual space, the main image acquisition flow is repeatedly performed each time the main image acquisition is performed.

### <<For Efficacy of One Embodiment of the Present Invention>>

As described above, the image acquisition device 10 (data acquisition device 1) acquires the real subject data corresponding to the virtual object data, based on the virtual object data and the image acquisition conditions (display conditions). That is, the image acquisition device 10 acquires the real subject image for the real subject corresponding to the virtual object based on the virtual image and the image acquisition conditions.

Therefore, it is possible to acquire the composite image corresponding to the virtual image, that is, the pseudo real image, using the real subject image included in the acquired real subject data. As a result, for example, the user can view the composite image and have an experience as if the user visited the place in the real space and performed imaging. As described above, according to the image acquisition device 10, it is possible to acquire an image close to the real space through imaging in the virtual space, and the acquired image makes it possible to provide the user with a more valuable experience.

In addition, since the processor 21 associates the acquired real subject data with the virtual object data, it is possible to easily acquire the real subject data. Therefore, it is possible to appropriately acquire an image close to the real space through imaging in the virtual space.

In addition, the real subject data is data for displaying the real subject corresponding to the virtual object. Specifically, the real subject data is a two-dimensional image obtained by imaging the real subject corresponding to the virtual object in the real space or a three-dimensional image obtained by scanning the three-dimensional shape of the real subject corresponding to the virtual object.

Therefore, the image acquisition device 10 can acquire an image closer to the real space through imaging in the virtual space.

In addition, the processor combines the plurality of acquired real subject images to generate a composite image corresponding to the virtual image. Therefore, it is possible to appropriately acquire an image, which is closer to the image of the real space and in which a plurality of real subjects are shown, through the imaging in the virtual space.

Further, the virtual image includes the avatar and the background as the virtual objects. Therefore, it is possible to appropriately acquire the composite image in which the person and the background as the real subjects corresponding to the virtual objects are shown.

In addition, the image acquisition conditions include imaging conditions for performing imaging with the virtual camera that imitates the real camera in the virtual space, environmental conditions related to the virtual environment that imitates the real environment in the virtual space, or conditions related to the background in the virtual space.

As described above, since the image acquisition conditions used to acquire the virtual image are associated with the acquisition conditions used to acquire the real subject image in the real space, it is possible to acquire an appropriate real subject image from the virtual image.

### <<Other Embodiments>>

In the above-described embodiment, the real subject image acquisition unit 37 acquires the real subject data corresponding to the virtual object data based on the virtual object data and the image acquisition conditions. However, the present invention is not limited thereto, and the image acquisition device may include a correction unit that corrects the acquired real subject image.

More specifically, the correction unit may correct the real subject image based on the image acquisition conditions.

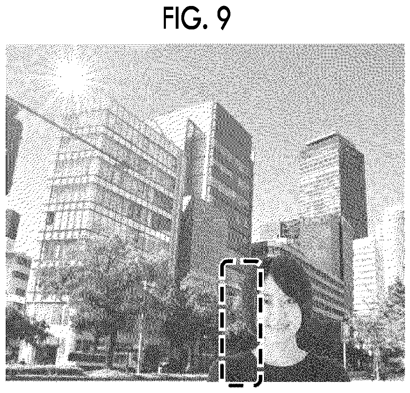

For example, in the example shown in Fig. 9, sunlight as the light source condition among the image acquisition conditions is set on the left side of the person as the real subject. Therefore, in the case of the image (photograph) acquired in the real space, the left side of the person as the real subject is illuminated with light, and the right side thereof is shadowed. As a result, a shadow will be formed on the person as the real subject. However, in a case where the real subject data acquired by the real subject image acquisition unit does not include the real subject image in which the shadow caused by the light source condition has been reflected, the correction unit may correct the shadow of the real subject image included in the real subject data.

More specifically, the correction unit corrects a tint (hue, saturation, brightness, and the like) of the real subject image of the person based on information related to the position of sunlight in the virtual space. In the example shown in Fig. 9, for example, the brightness of a region surrounded by a broken line on the left side of the real subject image of the person is corrected to be bright, and the other portion is corrected to be dark. As a result, the image acquisition device can generate a composite image corresponding to the direction of the sun in the real space.

In addition, the correction unit may correct the real subject image according to the state of the virtual object shown in the virtual image. The state of the virtual object includes, for example, the posture and expression of the avatar.

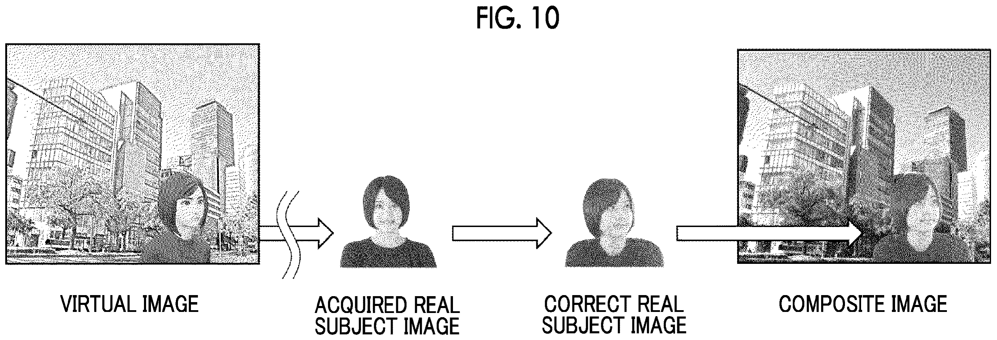

In the example shown in Fig. 10, it is assumed that the posture of the avatar as the virtual object shown in the virtual image is a sideways posture. On the other hand, the real subject data of the person acquired by the real subject image acquisition unit is a real subject image of a person facing forward. In this case, for example, the correction unit may correct the face of the person shown in the real subject image from the front orientation to the sideways orientation, using a known image correction technique.

In addition, in a case where a correction range is wide, as described above, the real subject image of the person looking sideways may be retrospectively acquired based on the "information for retrospectively acquiring the real subject image" stored in the real subject data. As a result, the image acquisition device can generate a composite image closer to reality, using the real subject image of the person corrected or acquired retrospectively.

Further, the image acquisition device may include a correction unit that corrects the image acquisition conditions, for example, the position information of the virtual object, and the time, period, past, weather, and the like in the virtual space, in response to an instruction from the user terminal 100.

More specifically, for example, it is assumed that the user who has checked the acquired virtual image refers to the position of the virtual object in the virtual image and changes the position of the real subject corresponding to the virtual object to generate a composite image. In this case, an instruction to change the image acquisition conditions is transmitted from the user terminal 100 to the image acquisition device. The correction unit changes the position of the real subject to a desired position in response to the instruction. As a result, the image acquisition device can generate a composite image that is closer to reality and is matched with the user's request, based on the corrected image acquisition conditions.

The processors included in the data acquisition device and the image acquisition device according to the embodiment of the present invention include various processors. The various processors include, for example, a CPU which is a general-purpose processor that executes software (program) to function as various processing units.

Moreover, the various processors include a programmable logic device (PLD) which is a processor whose circuit configuration can be changed after manufacturing, such as a field programmable gate array (FPGA).

Further, the various processors include, for example, a dedicated electric circuit which is a processor having a dedicated circuit configuration designed to execute a specific process, such as an application specific integrated circuit (ASIC).

Further, one processing unit provided in the data acquisition device and the image acquisition device according to the embodiment of the present invention may be configured by one of the various processors or may be configured by a combination of two or more processors of the same type or different types, for example, a combination of a plurality of FPGAs or a combination of an FPGA and a CPU.

Moreover, a plurality of functional units provided in the image acquisition device according to the embodiment of the present invention may be configured by one of the various processors, or two or more of the plurality of functional units may be integrated into one processor.

Further, as in the above-described embodiment, one processor may be configured by a combination of one or more CPUs and software and may function as the plurality of functional units.

Further, for example, an aspect may be adopted in which a processor that implements the functions of the entire system including the plurality of functional units of the data acquisition device and the image acquisition device according to the embodiment of the present invention, using one integrated circuit (IC) chip, is used. A representative example of this aspect is a system on chip (SoC). Furthermore, a hardware configuration of the various processors described above may be an electric circuit (circuitry) in which circuit elements, such as semiconductor elements, are combined.

### Explanation of References

1: data acquisition device
10: image acquisition device
11: database server
21: processor
22: memory
23: communication interface
24: storage device
31: user information receiving unit
32: data transceiver unit
33: image acquisition condition receiving unit
34: virtual image generation unit
35: virtual image transmission unit
36: instruction receiving unit
37: real subject image acquisition unit
38: real subject image combination unit
39: composite image transmission unit
100: user terminal
N: network
S: image acquisition system

## Claims

1. A data acquisition device comprising:
a processor,
wherein the processor is configured to acquire real subject data corresponding to virtual object data for displaying a virtual object in a virtual space, based on the virtual object data and a display condition for displaying the virtual space related to the virtual object.

2. The data acquisition device according to claim 1,
wherein the processor is configured to associate the acquired real subject data with the virtual object data.

3. The data acquisition device according to claim 1,
wherein the real subject data is data for displaying a real subject corresponding to the virtual object.

4. The data acquisition device according to claim 3,
wherein the real subject data is an image obtained by imaging the real subject corresponding to the virtual object in a real space.

5. The data acquisition device according to claim 3,
wherein the real subject data is a three-dimensional image of a three-dimensional shape of the real subject corresponding to the virtual object.

6. An image acquisition device comprising:
a processor,
wherein the processor is configured to:
receive image acquisition conditions for acquiring a virtual image in which a virtual space related to a virtual object is shown; and
acquire a real subject image for a real subject corresponding to the virtual object, based on the virtual image and the image acquisition conditions.

7. The image acquisition device according to claim 6,
wherein the processor is configured to combine a plurality of the acquired real subject images to generate a composite image corresponding to the virtual image.

8. The image acquisition device according to claim 6,
wherein an avatar and a background as the virtual objects are present in the virtual image.

9. The image acquisition device according to claim 6,
wherein the image acquisition conditions include an imaging condition for performing imaging with a virtual camera that imitates a real camera in the virtual space.

10. The image acquisition device according to claim 6,
wherein the image acquisition conditions include an environmental condition related to a virtual environment that imitates a real environment in the virtual space.

11. The image acquisition device according to claim 6,
wherein the image acquisition conditions include a condition related to a background in the virtual space.

12. The image acquisition device according to claim 6,
wherein the processor is configured to correct the real subject image based on the image acquisition conditions.

13. The image acquisition device according to claim 6,
wherein the processor is configured to correct the real subject image according to a state of the virtual object shown in the virtual image.

14. The image acquisition device according to claim 7,
wherein the processor is configured to store the acquired composite image in association with the image acquisition conditions.

15. A data structure comprising:
virtual object data that is used in a process of displaying a virtual object in a virtual space; and
a display condition that is used together with the virtual object data in a process of acquiring real subject data corresponding to the virtual object data and that is for displaying the virtual space related to the virtual object.

16. The data structure according to claim 15, further comprising:
the acquired real subject data.

17. A data acquisition method executed by a processor, the data acquisition method comprising:
a process of acquiring real subject data corresponding to virtual object data for displaying a virtual object in a virtual space, based on the virtual object data and a display condition for displaying the virtual space related to the virtual object.

18. An image acquisition method executed by a processor, the image acquisition method comprising:
a process of receiving image acquisition conditions for acquiring a virtual image in which a virtual space related to a virtual object is shown; and
a process of acquiring a real subject image for a real subject corresponding to the virtual object, based on the virtual image and the image acquisition conditions.

19. A program causing a computer to execute each process included in the data acquisition method according to claim 17.

20. A program causing a computer to execute each process included in the image acquisition method according to claim 18.

21. A computer-readable recording medium on which a program causing a computer to execute each process included in the data acquisition method according to claim 17 is recorded.

22. A computer-readable recording medium on which a program causing a computer to execute each process included in the image acquisition method according to claim 18 is recorded.
